(19) **Europäisches Patentamt**

**European Patent Office**

**Office européen des brevets**

(11) **EP 1 303 831 B1**

(12) **EUROPÄISCHE PATENTSCHRIFT**

(45) Veröffentlichungstag und Bekanntmachung des Hinweises auf die Patenterteilung:
**15.09.2004  Patentblatt 2004/38**

(21) Anmeldenummer: **01955308.0**

(22) Anmeldetag: **13.06.2001**

(51) Int Cl.$^7$: **G06K 7/10**, G06K 7/08

(86) Internationale Anmeldenummer:
**PCT/EP2001/006669**

(87) Internationale Veröffentlichungsnummer:
**WO 2002/011055 (07.02.2002 Gazette 2002/06)**

(54) **VERFAHREN ZUR ERZEUGUNG EINES QUASI-ISOTROPEN MAGNETWECHSELFELDES**

METHOD FOR GENERATING A QUASI-ISOTROPIC MAGNETIC ALTERNATING FIELD

PROCEDE DE PRODUCTION D'UN CHAMP MAGNETIQUE ALTERNATIF QUASI-ISOTROPE

(84) Benannte Vertragsstaaten:
**AT BE CH CY DE DK ES FI FR GB GR IE IT LI LU MC NL PT SE TR**

(30) Priorität: **27.07.2000  EP 00116069**

(43) Veröffentlichungstag der Anmeldung:
**23.04.2003  Patentblatt 2003/17**

(73) Patentinhaber: **Siemens Transit Telematic Systems AG**
**8212 Neuhausen (CH)**

(72) Erfinder:
• **LAUPER, Alfred**
**CH-8047 Zürich (CH)**

• **AUKIA, Matti-Pekkia**
**CH-8044 Zürich (CH)**

(74) Vertreter: **Kley, Hansjörg**
**c/o Siemens AG**
**Patentabteilung**
**Postfach 22 16 34**
**80506 München (DE)**

(56) Entgegenhaltungen:
FR-A- 2 776 864          US-A- 5 258 766

• **PATENT ABSTRACTS OF JAPAN vol. 017, no. 230 (E-1361), 11. Mai 1993 (1993-05-11) & JP 04 361405 A (TAKASHI NAKAMURA;OTHERS: 01), 15. Dezember 1992 (1992-12-15)**

**Beschreibung**

Die vorliegende Erfindung betrifft ein Verfahren zur Erzeugung eines quasi-isotropen Magnetwechselfeldes nach dem Oberbegriff des Patentanspruches 1.

In FR 2 776 864 A1 ist eine Anordnung beschrieben, die erlaubt, im Raum ein magnetisches Drehfeld zu erzeugen um elektrische Karten wie z.B. elektronische Billette elektrisch zu speisen. Der Patentanspruch 1 ist gegenüber diesem Stand der Technik abgegrenzt.

In US 5,258,766 (Murdoch) ist eine Antennenstruktur offenbart, mit der ein gleichmässiges Magnetfeld erzeugt werden kann, wobei der Ort des gleichmässigen Magnetfeldes durch die Antennenstruktur begrenzt wird. Eine solche Struktur lässt sich in einem Eisenbahnwagen jedoch nicht ohne grosse konstruktive Eingriffe und somit nicht ohne grossen Aufwand einbauen.

Aus WO 98/53420 ist ein drahtloses Kommunikationssystem bekannt, das zwischen einem Terminal und einer Mehrzahl von tragbaren Objekten eine Kommunikation mittels eines modulierten Magnetwechselfeldes ermöglicht.

Diese tragbaren Objekte sind vielfach als sogenannte Smart-Cards ausgebildet, oft wird dafür auch die Bezeichnung elektronisches Billett verwendet. Solche elektronischen Billette weisen ein Empfangsmodul und meist auch ein Sendemodul auf. Sie haben üblicherweise eine Grösse von 53 x 85mm$^2$. Die Energieversorgung kann über eine eingebaute Energiequelle, z.B. eine Batterie und/oder durch ein Magnetwechselfeld erfolgen. Um den Energieverbrauch zu minimieren, ist für den Betrieb ein Schlafmodus (sleep mode) vorgesehen: Durch den Eintritt einer solchen Smart-Card in ein solches Wechselfeld wird in einer auf der Smart-Card angeordneten Antenne eine Spannung induziert, mit der die betreffende Smart-Card in einen Aktivzustand versetzt werden kann. Erfolgt im Anschluss daran keine weitere Kommunikation, fällt die Smart-Card nach einer festgelegten Zeit in den energiesparenden Schlafmodus zurück. Solche Verfahren und Ausführungsformen von solchen Smart-Cards sind aus EP 0 902 353 und aus WO 01/20557 A1 bekannt. Der dadurch resultierende geringere Energieverbrauch ermöglicht eine höhere Autonomie. Für solche Anwendungen sind wegen der sich ergebenden Nahfeldeffekte Frequenzen der Grösse 6.78 MHz, 13,56 MHz oder 27,1 MHz gebräuchlich.

Da mit der übertragenen Information eine Verrechnung einer bezogenen Leistung, wie z.B. eine Fahrt mit einer Strassenbahn oder ein Besuch eines Ausstellungsraumes, verbunden sein kann, ist ein besonders zuverlässiges Wecken und eine zuverlässige Uebertragung gefordert. Insbesondere werden solche Smart-Cards in Verkehrsmitteln in Verbindung mit einem in einem Fahrzeug angebrachten Sendegerät angewendet. Vorzugsweise werden diese Sendegeräte im Zugangsbereich angeordnet. Die von Personen getragenen Smart-Cards weisen eine beliebige Orientierung auf, insbesondere auch relativ zu den magnetischen Wechselfeldlinien und relativ zu einem Sendegerät. Dadurch kann nicht immer in der Antenne einer Smart-Card die erforderliche Spannung $U_i(t)$ induziert werden: Für die Spannung $U_i(t)$ gilt die Proportionalitätsbeziehung:

$$U_i(t) \ \sim \ \frac{d}{dt}\int_A B\,dA \quad .$$

Dabei steht A für die Fläche der Smart-Card und B für die magnetische Induktion, B und dA sind vektorielle Grössen und miteinander über das Skalarprodukt verknüpft.

Der vorliegenden Erfindung liegt daher die Aufgabe zugrunde ein Verfahren zur Erzeugung eines Magnetwechselfeldes anzugeben, so dass unabhängig von der Lage einer auf einer Smart-Card befindlichen Antenne relativ zu einer fest angebrachten Antennenanordnung eine genügende Spannung induziert wird.

Diese Aufgabe wird durch die im Patentanspruch 1 angegebenen Massnahmen gelöst. Vorteilhafte Ausgestaltungen der Erfindung sind in weiteren Ansprüchen angegeben.

Dadurch dass die Antennenanordnung drei je im wesentlichen ebene Rahmenantennen mit wenigstens je einer Windung aufweist, wobei die durch die drei Rahmenantennen definierten Ebenen je paarweise nicht planparallel sind und dass die Informationseinheiten den Rahmenantennen sequentiell alternierend so zugeführt werden, dass von der Antennenanordnung ein quasi-isotropes Magnetwechselfeld abgestrahlt wird; sind die Antenneneinheiten von einfachem konstruktivem und einfachem schaltungsmässigem Aufbau, so dass diese ohne grossen Aufwand mehrfach angeordnet werden können.

So können sich die folgenden Vorteile zusätzlich ergeben:

i) Durch die einfache geometrische Form der Antennenanordnung ergibt sich eine leichte Installierbarkeit im Zugangsbereich eines Fahrzeugs oder Raumes (Patentanspruch 3).

ii) In einer kaskadierten Anordnung der Antennenanordnung mit einer der Kaskade entsprechenden Beschaltung oder der geometrischen Positionierung der Antennenanordnung kann auch in einem grösseren Raumbereich, z. B. in einem Eisenbahnwagen, ein quasi-iso-tropes Magnetwechselfeld erzeugt werden (Patentanspruch 4).

iii) In einer Kaskade der Antennenanordnungen mit der alternierenden um $\Pi$ gedrehten Positionierung können diese konstruktiv und schaltungsmässig identisch ausgeführt werden, so dass eine leichte Installierbarkeit gewährleistet ist (Patentanspruch 5)

Die Erfindung wird nachfolgend anhand der Zeichnung beispielsweise näher erläutert. Dabei zeigen:

Fig. 1a   eine Antennenanordnung mit zwei zueinander orthogonalen Rahmenantennen mit zugehörigen H-Feld-Basisvektoren;

Fig. 1b   in Kombination mit Figur 1a drei zu einander orthogonale Rahmenantennen mit dem zugehörigen H-Feld-Basisvektor;

Fig. 2   eine Anordnung von je zwei zueinander paralleler Rahmenantennen;

Fig. 3a   Darstellung des resultierenden Magnetwechselfeldes unter Verwendung zweier Rahmenantennen;

Fig. 3b   Darstellung des resultierenden Magnetwechselfeldes bei Amplituden-Modulation der z-Komponente unter Verwendung dreier Rahmenantennen;

Fig. 4   Positionierung einer Antennenanordnung im Zugangsbereich eines Eisenbahnwagens;

Fig. 5   Verlauf des Betrages der Feldstärke H längs einer kaskadierten Positionierung der Antennenanordnung mit einer der Kaskade entsprechenden Beschaltung;

Fig. 6   Blockschaltbild zur Erzeugung von drei je einer Rahmenantenne zuzuführenden Ströme $I_x$, $I_y$ und $I_z$.

Fig. 7   Blockschaltbild mit aktiver Endstufe zur Erzeugung eines zirkularen Magnetfeldes

Fig. 8   Blockschaltbild mit an einer Schalteinheit angeschlossenen aktiven Endstufe zur Erzeugung eines sequentiell isotropen Magnetfeldes.

Fig. 9   Verteilung der kumulierten Wahrscheinlichkeit des Auftretens der Feldstärke H.

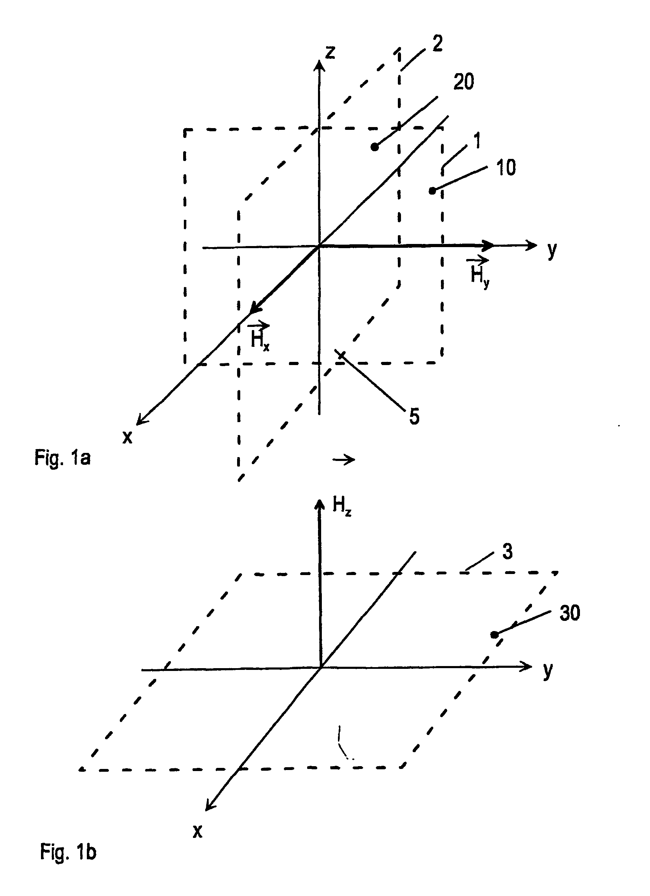

Figur 1a zeigt durch die strichliiert dargestellten Rechtecke 10 und 20 zwei zueinander im wesentlichen rechtwinklig ineinander angeordnete Rahmenantennen, nämlich eine erste Rahmenantenne 1 und eine zweite Rahmenantenne 2. Den Rechtecken (und Ebenen) 10 und 20 ist als Momentanwert je ein Basisvektor $\vec{H}_x$ und $\vec{H}_y$ zugeordnet, die in einer Superposition einen resultierenden Vektor $\vec{H}$ ergeben (in Fig. 1a nicht dargestellt). Im strengen Sinne gibt es keine isotrope Polarisation wegen der Forderung der Gleichzeitigkeit. Unter einer quasi-isotropen Polarisation wird im folgenden eine in einen lokal begrenzten Bereich (Zugangsbereich) über eine bestimmte Zeitdauer isotrope Polarisation bezeichnet. Die Zeitdauer kann beispielsweise 0,1 ms entsprechend einer Frequenz von 10 kHz betragen. Die Isotropie ergibt sich somit aus nacheinander verschiedenen Richtungen des Magnetwechselfeldes $\vec{H}$.

Einer Antennenanordnung gemäss Fig. 1a werden Ströme $I_x(t)$ und $I_y(t)$ zugeführt, wobei die Proportionalitätsbeziehung gilt:

$I_x \sim H_x$ und $I_y \sim H_y$.

Im folgenden werden die zeitlichen Grössen unter Voraussetzung der vorstehenden Proportionalitätsbeziehung stets als H-Feld bzw. als H-Feld-Komponente angegeben:

$$H_x = H_0 \cdot \sin \omega t,$$

$H_x$ steht für den Betrag von $\vec{H}_x$,

$$Hy = H_0 \cdot \sin (\omega t + {}^{\Pi}/_2).$$

Die Grösse $\omega$ ist die Kreisfrequenz gemäss der Verknüpfung $\omega := 2\Pi \cdot f$, wobei die Frequenz f beispielsweise 6.78 MHz beträgt.

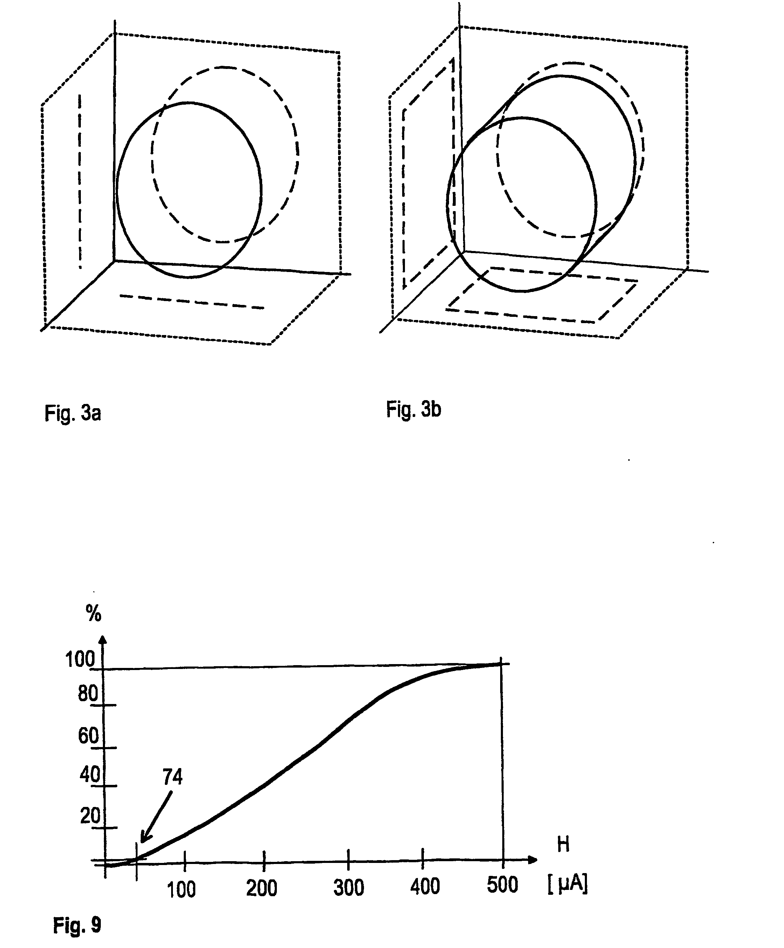

Der resultierende Vektor $\vec{H} := \vec{H}_x + \vec{H}_y$ dreht sich in einer Ebene gemäss der Darstellung in Fig. 3a mit den drei Projektionen in einem orthogonalen Koordinatensystem. Diese Polarisation wird als zirkular bezeichnet. Gemäss der vorstehend aufgeführten Definition wird diese Polarisation als quasiisotrop betrachtet. Die Ebenen 10 und 20 der Rahmenantennen 1 und 2 sind nicht planparallel; in einer besonderen Ausführungsform können diese Ebenen zueinander im Bereich 90° $\pm\delta$ einstellbar sein, um die Beeinflussung durch metallische Wände im Zugangsbereich ausgleichen zu können. Der Wert von $\delta$ kann z.B. im Bereich von 5° liegen.

Mit einem solchen Magnetwechselfeld $\vec{H}$ können in einem Zugangsbereich sämtliche elektronischen Billette 7 erfasst werden, die über den ganzen Bewegungsablauf nicht planparallel zur Zirkulationsebene liegen. Ein solches elektronisches Billett wird dabei üblicherweise von einer Person in einer Tasche oder in der Geldbörse getragen. Im folgenden wird das elektronische Billett 7 und das darauf befindliche Empfangsmodul mit dem gleichen Bezugszeichen 7 bezeichnet.

Eine weitere Verbesserung zur Quasi-Isotropie eines Magnetwechselfeldes ergibt sich, wenn eine dritte Rahmenantenne 3 verwendet wird. Diese dritte Rahmenantenne 3 ist aus Uebersichtlichkeitsgründen abgesetzt zur Fig. 1a in der Fig. 1b dargestellt ist. Die Ebene 30 der dritten Rahmenantenne 3 ist dabei vorzugsweise orthogonal zu den beiden Ebenen 10 und 20 der Rahmenantennen 1 und 2.

Alternativ kann die dritte Rahmenantenne mit folgenden nachstehend unter a), b) und c) aufgeführten Strömen $I_z(t)$ beaufschlagt werden. Dabei wird wiederum von der Proportionalitätsbeziehung $I_z \sim H_z$ Gebrauch gemacht.

a) Amplitudenmodulation für die z-Komponente:

$$H_x := H_0 \cdot \sin \omega t$$

$$H_y := H_0 \cdot \sin (\omega t + {}^{\Pi}/_2)$$

$$H_z := H_0 \cdot (\sin \omega_2 t) \cdot (\sin \omega t) =$$

$$= H_0/_2 \cdot (\cos(\omega - \omega_2)t - \cos(\omega + \omega_2)t)$$

$\omega_2$ steht für die Modulationsfrequenz, dabei gilt $\omega_2 \ll \omega$; z.B. $\omega_2 = 2\Pi \cdot 10$ kHz.
Der resultierende Vektor $\vec{H} := \vec{H}_x + \vec{H}_y + \vec{H}_z$ überstreicht von einem Mittelpunkt aus den Mantel eines Drehzylinders gemäss der Darstellung in Fig. 3b. Die drei Projektionen auf die Ebenen eines vorzugsweise orthogonalen Koordinatensystems sind ebenfalls in der Fig. 3b dargestellt.

b) Phasenmodulation für die z-Komponente

$$H_x = H_0 \cdot \sin \omega t$$

$$H_y = H_0 \cdot \sin(\omega t + {}^{\Pi}/_2)$$

$H_z := H_0 \cdot \sin(\omega t + \varphi)$, wobei $\varphi = \varphi(t)$ mit einem Wertebereich $W(\varphi) \subset [ - {}^{\Pi}/_2, {}^{\Pi}/_2 ]$, oder in anderer Notation: Die Funktion $\varphi(t)$ weist Werte im Bereich $-90°$ bis $+90°$ auf.

c) Frequenzoffsetmodulation für die z-Komponente:

$$H_x = H_0 \cdot \sin \omega t$$

$$H_y = H_0 \cdot \sin(\omega t + {}^{\Pi}/_2)$$

$$H_z := H_0 \cdot \sin(\omega t + \Phi \cdot t')$$

wobei: $\Phi$ konstant, $t' := t \mod T_\varphi$ und mod eine auf der Menge der reellen Zahlen 3 verallgemeinerte Modulofunktion ist. In einer gegenüber
$\varphi(t) = \Phi \cdot (t \mod T_\varphi)$ verallgemeinerten Form kann eine Frequenzoffsetmodulation für jede Funktion mit der Eigenschaft $\varphi(t) = \varphi(t + T_\varphi)$ benutzt werden.

Durch eine Amplituden- und Phasenmodulation aller den drei Rahmenantennen zuzuführenden Ströme $I_x$, $I_y$ und $I_z$ kann ein beliebiger Feldvektor $\vec{H}$ im Raum erzeugt werden.

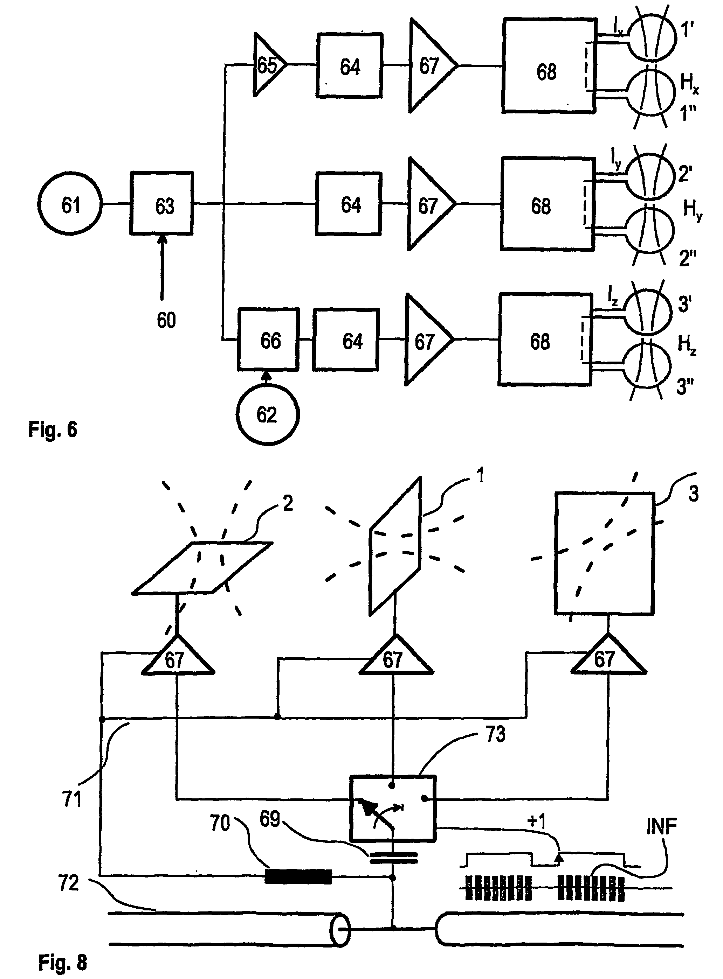

In Fig. 6 ist für die vorstehend unter a) beschriebene Amplitudenmodulation ein Blockschaltbild einer Sendeeinheit 6 für die Erzeugung der Ströme $I_x$, Iy und $I_z$ bzw. der Feldkomponenten $H_x$, $H_y$ und $H_z$ gezeigt. Der Sendeeinheit 6 sind je zwei paarweise im wesentlich parallele Rahmenantennen 1, 1'; 2, 2' sowie 3, 3' zugeordnet. Ein erster Oszillator erzeugt ein Rechtecksignal der Frequenz $f_1$ = 13.56 MHz. Dem ersten Oszillator ist ein On/Off-Modulator 65 nachgeschaltet, über den die zu übertragenden Daten/Informationen 60 dem Rechtecksignal überlagert werden. Mit einem On/Off-Modulator kann eine Puls-Code-Modulation bewirkt werden. Für die x-Komponente wird dem Frequenzteiler 64 ein Inverter vorgeschaltet, dadurch ergibt sich zwischen dem Signal für die x- und y-Komponente eine Phasenver-schiebung von $\Pi/_2$. Für die z-Komponente ist dem Frequenzteiler 64 eine Phasenschiebeschaltung 66 vorgeschaltet, der ein Signal eines zweiten Oszillators 62 zugeführt wird. Für die Frequenz $f_2$ des zweiten Oszillators gilt wie vorstehend unter der Amplitudenmodulation erläutert: $f_2 \ll f_1$, z.B. $f_2$ = 10 kHz. Die vom Frequenzteiler 64 erzeugten Signale der Frequenz $f := f_1/2$ werden je einem Antennenverstärker 67 zugeführt und von dort über je eine Anpass-Schaltung 68 den Rahmenantennen 1, 1'; 2, 2' und 3, 3' zugeführt.

Die zu übermittelnde Information 62 mittels einer Informationseinheit INF weist beispielsweise für eine Anwendung als elektronisches Billett eine Struktur gemäss Tabelle 1 auf.

Informationseinheit INF:

Tabelle 1

| Informationsfelder | Bedeutung |
|---|---|
| CYCLE | Zeiteinheit und zeitbezug |
| COMMAND | Befehle an das Billett 7 |
| POSITION | Ort |
| COURSE | Kursnummer |
| DATETIM2 | Datum und Uhrzeit |
| TYPE | Art des Verkehrsmittels |
| ADDRESS | Adresse einer im Fahrzeug befindlichen Sende-/Empfangseinheit |
| APPLICATION | Anwendung |

Eine solche Informationseinheit INF, auch Record INF genannt, weist z.B. eine Grösse von (4+1+2+2+4+1+4+2) Byte = 20 Byte auf. Für die Sicherung der Uebertragung und für eine allfällige Verschlüsselung ist noch eine zusätzliche Uebertragungskapazität erforderlich.

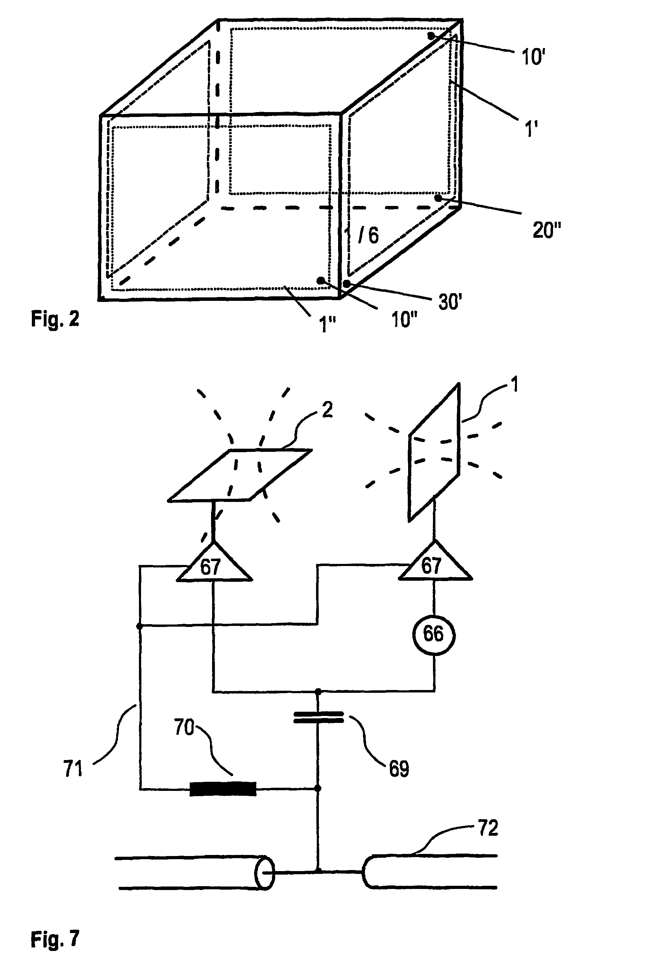

Die Ausführung der Antennenanordnung 5 kann gemäss der Fig. 1a und 1b erfolgen, je nach verlangter Feldstärke können mehrere Windungen 4 für die drei Rahmenantennen 1, 2 und 3 vorgesehen sein. Aus Symmetriegründen werden für die Rahmenantennen 1 und 2 vorzugsweise die gleiche Windungszahl gewählt. Abweichend zur Darstellung in Fig. 6 kann für die z-Komponente auch nur eine in einer Ebene befindliche Rahmenantenne 3 vorgesehen sein, wie dies schemaartig in der Fig. 2 dargestellt ist. Die Rahmenantenne 1 ist in zwei Teilrahmenantennen 1' und 1" gegliedert, deren Ebenen im wesentlichen zueinander planparallel sind. Diese Gliederung in zwei Teilrahmenantennen kann für eine beliebige Auswahl der zwei oder drei Rahmenantennen 1, 2 und 3 erfolgen. Aus Uebersichtlichkeitsgründen ist dies in Fig. 2 nicht vollständig dargestellt. Je nach konstruktiver Ausgestaltung der Rahmen oder Teilrahmenantenne sind diese nicht umfassend in einer Ebene angeordnet, sondern nur im wesentlichen in einer Ebene. Ebenso ist es möglich, wie in Fig. 1a und 1b angedeutet, dass zwei oder drei Rahmenantennen 1, 2 und 3 ineinander angeordnet sind.

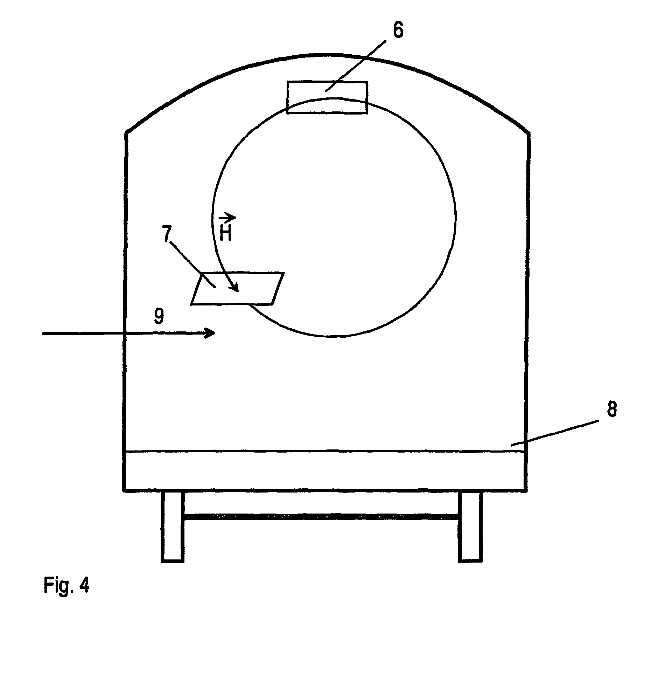

In der Fig. 4 ist die Situation zu einem bestimmten Zeitpunkt t im Zugangsbereich gezeigt. Damit die Billette 7 von dem vor der Antennenanordnung 5 erzeugten Feld $\vec{H}$ tatsächlich geweckt werden, müssen die durch die Billett-fläche durchdringenden Feldlinien $\vec{H}$ bzw. Flussdichte $\vec{B}$ eine minimale Induktion hervorrufen, die proportional dem folgenden Integral ist:

$$\int_A \mathbf{B}\, d\mathbf{A} \quad,$$

A steht für die Fläche des Billettes 7.

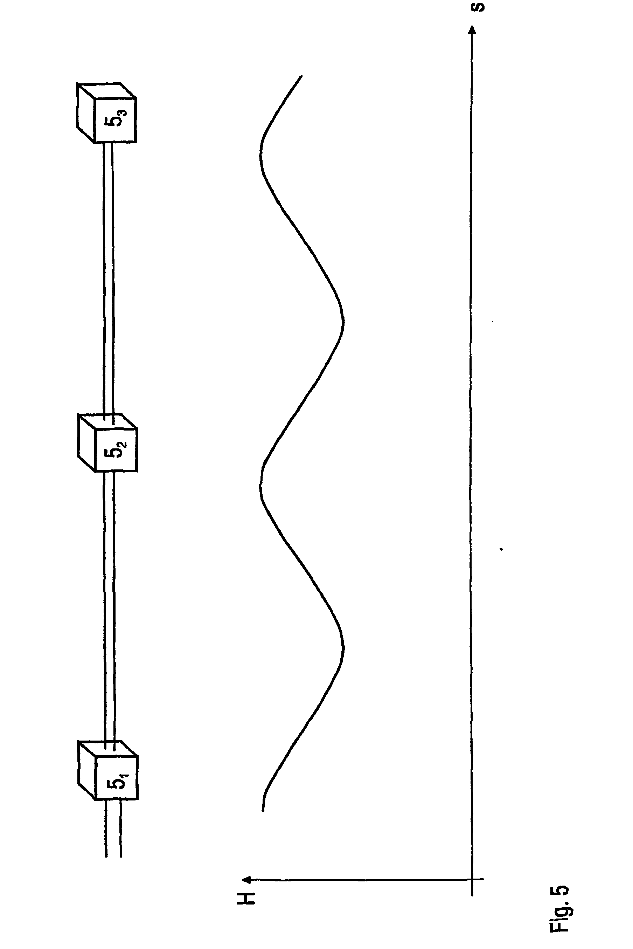

Je nach Anwendung ist es erforderlich, dass der Weckvorgang nicht auf einen Zugangsbereich beschränkt ist, sondern in einem grösseren Bereich eines Raumes, z.B. in einem Eisenbahnwagen, erfolgen soll. In einer weiteren Ausführungsform der vorliegenden Erfindung wird diese Aufgabe durch eine mehrfache Längspositionierung von Antennenanordnungen $5_1$, $5_2$, $5_3$ gelöst. Die prinzipielle Anordnung sowie der Betrag H := $|\vec{H}|$ des resultierenden quasi-isotropen Feldes $\vec{H}$ ist der Fig. 5 zu entnehmen. Während für die Ansteuerung einer einzigen Antennenanordnung 5 eine Sendeeinheit 6 gemäss der Fig. 6 vorgesehen ist, kann die Ansteuerung der einzelnen Antennenanordnungen $5_1$, $5_2$, $5_3$ passiv mit je einem Anpassnetzwerk (nicht dargestellt) erfolgen, um längs der angeordneten Antennenanordnungen $5_1$, $5_2$, $5_3$ ein optimal quasi-isotropes Magnetwechselfeld zu erhalten. Die Anpassnetzwerke von der Art einer Anpass-Schaltung 68 sind dabei einzeln oder in Serie mit einer Sendeeinheit 6 gemäss Fig. 6 verbunden. Mit dem Anpassnetzwerk können insbesondere die Phasen der einzelnen den jeweiligen Rahmenantennen zuzuführenden Ströme $I_x$, $I_y$ und $I_z$ verändert werden.

Alternativ zur vorstehend beschriebenen passiven Antennenanordnung ist in Fig. 7 ein Blockschaltbild mit aktiver Endstufe zur Erzeugung eines zirkularen bzw. quasi-isotropen Magnetfeldes dargestellt. In einem länglichen Raum wie z.B. ein Eisenbahnwagen ist ein Koaxialkabel 72 montiert, an dem in Abständen von etwa 3 - 5 m eine Antennenanordnung mit einem Blockschaltbild gemäss der Fig. 7 angeschlossen ist. Für die beiden Rahmenantennen 1 und 2 ist je ein Antennenverstärker 67 vorgesehen, der über eine Speiseleitung 71 und eine Induktivität 70 vom Koaxialkabel 72 her mit Energie versorgt wird. Dem einen Antennenverstärker 67 ist eine Phasenschiebeschaltung 66 vorgeschaltet, die das Signal um vorzugsweise $^{\Pi}/_2$ in der Phase schiebt. Die Phasenschiebeschaltung 66 sowie der andere Antennenverstärker 67 sind über ein Koppelkondensator 69 mit dem Koaxialkabel verbunden.

Für eine bevorzugte Ausführungsform der vorliegenden Erfindung wird auf die Fig. 8 bezug genommen. Zusätzlich zur Fig. 7 sind entsprechend einem kartesischen Koordinatensystem drei Rahmenantennen 1, 2 und 3 vorgesehen, die je an einen Antennenverstärker 67 angeschlossen sind. Die Versorgung der Antennenverstärker 67 mit Energie erfolgt auf die gleiche Weise wie bereits in Fig. 7 erläutert. Die vorstehend erwähnte Informationseinheit INF gemäss der Tabelle 1 wird vorzugsweise periodisch ausgesendet, z.B. in einem Zeitraster von 70 ms zu 30 ms; das heisst, für die Uebermittlung einer Informationseinheit sind 70 ms vorgesehen, anschliessend ist während 30 ms kein Trägersignal vorhanden. Zwei solche Zyklen zur Aussendung einer Informationseinheit sind in der Fig. 8 unten rechts dargestellt.

Eine Schalteinheit 73 ist in dieser Ausführungsform der Erfindung über einen Koppelkondensator 69 an das Koaxialkabel 72 angeschlossen. Diese Schalteinheit 73 detektiert das Vorhandensein des Trägersignals und schaltet zyklisch beim Fehlen eines Trägersignals von einem Antennenverstärker 67 auf den nächstfolgenden. Dadurch erfolgt die Aussendung der Informationseinheiten INF alternierend durch eine Rahmenantenne 1 in der yz-Ebene bzw. Rahmenantenne 2 in der xz-Ebene bzw Rahmenantenne 3 in der xy-Ebene gemäss der Disposition in Fig. Ia. Dadurch entsteht ein quasi-isotropes bzw. ein sequentiell isotropes Magnetfeld, so dass praktisch keine Positionen von elektronischen Billetten 7 möglich sind, in denen für die Uebertragung der Informationseinheiten INF ungenügende Feldstärke vorhanden ist. Je nach Geometrie des mit einem sequentiell-isotropen Magnetfeldes zu versorgenden Raumes können auch nur zwei Ebenen für die Rahmenantennen vorgesehen sein.

In der Kaskade gemäss der Fig. 5 sind in einer bevorzugten Ausführungsform die konstruktiv identischen Antennenanordnungen $5_1$, $5_2$, ..mit einem Blockschaltbild gemäss den Fig. 6, 7 oder 8 alternierend um n angeordnet. Die Verteilung der Feldstärke in einer solchen Kaskade mit Antenneneinheiten gemäss der Fig. 8 ist in Fig. 9 dargestellt. Diese Verteilung bezieht sich auf eine Höhe von etwa 0.8 m oberhalb des Fussbodens eines Eisenbahnwagens. Der Kaskade ist der rechteckige Grundriss eines Eisenbahnwagens zugrundegelegt. Angenommen wird, dass die elektronischen Billette 7 eine Ansprechschwelle 74 von 40 µA zugrundegelegt, so dass mit einer hohen Wahrscheinlichkeit ein Billett 7 einer genügenden Feldstärke, d.h. > 40 µA, ausgesetzt ist, dabei ist die räumliche Bewegung des Billettes durch die Bewegung der betreffenden Person noch nicht berücksichtigt.

Liste der verwendeten Bezugszeichen

| | |
|---|---|
| 1 | Erste Rahmenantenne |
| 1', 1" | erste Teilrahmenantennen |
| 2 | Zweite Rahmenantenne |
| 2', 2" | zweite Teilrahmenantennen |
| 3 | Dritte Rahmenantenne |
| 3', 3" | dritte Teilrahmenantennen |
| 4 | Windungen einer Rahmenantenne |
| 5 | Antennenanordnung |
| $5_1$, $5_2$, $5_3$ | längs angeordnete Antennenanordnungen |

| | |
|---|---|
| 6 | Sendeeinheit |
| 7 | Elektronisches Billett; Empfangsmodul |
| 8 | Wagen |
| 9 | Zugangsrichtung |
| 10 | Ebene der ersten Rahmenantenne |
| 10', 10" | Ebenen der ersten Teilrahmenantennen |
| 20 | Ebene der zweiten Rahmenantenne |
| 20', 20" | Ebenen der zweiten Teilrahmenantennen |
| 30 | Ebene der dritten Rahmenantenne |
| 30', 30" | Ebenen der dritten Teilrahmenantennen |
| 60 | Einspeisung der zu übertragenden Information INF |
| 61 | Erster Oszillator, $f_1$ = 13.56 MHz |
| 62 | Zweiter Oszillator, $f_2$ = 10 kHz |
| 63 | On/Off-Modulator für Amplitudenmodulation |
| 64 | Teiler; ":2", getriggert auf eine fallende Flanke |
| 65 | Inverter |
| 66 | Phasenschiebeschaltung |
| 67 | Antennenverstärker |
| 68 | Anpass-Schaltung |
| 69 | Koppelkondensator |
| 70 | Induktivität |
| 71 | Speiseleitung |
| 72 | Koaxialkabel |
| 73 | Schalteinheit |
| 74 | Ansprechschwelle |

**Patentansprüche**

1. Verfahren zur Erzeugung eines Magnetwechselfeldes ($\vec{H}$) für eine Uebertragung von Informationseinheiten (INF) von einer Antennenanordnung (5) zu einem tragbaren Empfangsmodul (7), welches im Magnetwechselfeld ($\vec{H}$) frei bewegbar ist, wobei die Antennenanordnung (5) drei je im wesentlichen ebene Rahmenantennen (1, 2, 3) mit wenigstens je einer Windung (4) aufweist und die durch die drei Rahmenantennen (1, 2, 3) definierten Ebenen (10, 20, 30) je paarweise nicht planparallel sind **dadurch gekennzeichnet, dass** die Informationseinheiten (INF) mittels einer ON-/OFF-Modulation (65) den Rahmenantennen (1, 2, 3) sequentiell alternierend so zugeführt werden, dass von der Antennenanordnung (5) ein quasi-isotropes Magnetwechselfeld ($\vec{H}$) abgestrahlt wird.

2. Verfahren nach Patentanspruch 1, **dadurch gekennzeichnet, dass** auf einer auf dem Empfangsmodul (7) angeordneten Rahmenantenne eine Induktion für einen Empfang der Informationseinheit (INF) erfolgt.

3. verfahren nach Patentanspruch 1 oder 2, **dadurch gekennzeichnet, dass** die durch die Rahmenantennen (1, 2, 3) definierten Ebenen (10, 20, 30) im wesentlichen zueinander orthogonal einstellbar sind und/oder dass die Rahmenantennen (1, 2, 3) ineinander angeordnet sind.

4. Verfahren nach einem der Patentansprüche 1 bis 3, **dadurch gekennzeichnet, dass** mehrere Antennenanordnungen (5, $5_1$, $5_2$, $5_3$) an ein Koaxialkabel angeschlossen und kaskadiert angeordnet sind und entweder durch eine die gegenseitige Lage der Antennenanordnung (5) berücksichtigende Beschaltung (68) oder durch eine geometrische Positionierung der einzelnen Antennenanordnungen (5) ein quasi-isotropes Magnetwechselfeld ($\vec{H}$) erzeugt wird.

5. Verfahren nach Patentanspruch 4, **dadurch gekennzeichnet, dass** die kaskadiert angeordneten Antennenanordnungen (5, $5_1$, $5_2$, $5_3$) konstruktiv identisch sind jedoch dass stets

7

zwei aufeinanderf olgende Antennenanordnungen (5$_1$, 5$_2$; 5$_2$, 5$_3$; ..) um $\Pi$ gedreht positioniert sind.

**6.** Verfahren nach Patentanspruch 5,
   **dadurch gekennzeichnet, dass**
   die Informationseinheiten (INF) mittels eines angeschlossenen Oszillators (61) und Modulators (60, 63) generiert und dem Koaxialkabel (72) zugeführt werden.

**Claims**

**1.** Method for the production of a magnetic alternating field (H) for a transmission from information units (INF) of an antenna array (5) to a portable receiving module (7), which is freely movable in the magnetic alternating field ($\vec{H}$),
   **marked thereby that,**
   The antenna array (5) shows three each essentially planar frame antennas (1, 2, 3) with at least on winding (4), whereby the tiers (10, 20, 30) defined by the three frame antennas (1, 2, 3) are each pair-wise not plane-parallel and that the information units (INF) are, sequentially alternating, supplied to the frame antennas (1, 2, 3), so that a quasi-isotropic magnetic alternating field ($\vec{H}$) is radiated from the antenna array (5).

**2.** Method according to patent claim 1,
   **marked thereby, that**
   an induction for the reception of the information unit (INF) occurs on a frame antenna placed on the receiving module. (7).

**3.** Method according to claim 1 or 2,
   **marked thereby, that**
   the tiers (10, 20, 30) defined by the frame antennas (1, 2, 3) are essentially orthogonally adjustable towards each other and/or that the frame antennas (1, 2, 3) are interlaced.

**4.** Method according to one of the patent claims 1 to 3,
   **marked thereby that**,
   several antenna arrays (5, 5$_1$, 5$_2$, 5$_3$) are connected to a coaxial cable and are arranged cascading and quasi-isotropic magnetic alternating field ($\vec{H}$) is either produced by a wiring (68) which takes into account the opposite position of the antenna array (5) or by a geometrical positioning of the individual antenna arrays.

**5.** Method according to claim 4,
   **marked thereby, that**
   the cascading arranged antenna arrays (5, 5$_1$, 5$_2$, 5$_3$) are constructively identical but that two sequential antenna arrays (5$_1$, 5$_2$; 5$_2$, 5$_3$;..) are positioned turned by $\Pi$.

**6.** Method according to claim 5,
   **marked thereby, that**
   the information unit (INF) are generated by a connected oscillator (61) and modulator (60, 63) and are supplied to the coaxial cable (72).

**Revendications**

**1.** Procédé de production d'un champ ($\vec{H}$) magnétique alternatif pour une transmission d'unités (INF) d'information d'un dispositif (5) d'antennes à un module (7) de réception portatif, qui peut se déplacer librement dans le champ ($\vec{H}$) magnétique alternatif, le dispositif (5) à antenne ayant trois antennes cadres (1, 2, 3) sensiblement planes, ayant au moins chacune une spire (4) et les plans (10, 20; 30) définis par les trois antennes cadres (1, 2, 3) n'étant pas parallèles par paire, **caractérisé en ce que** les unités (INF) d'information sont envoyées au moyen d'une modulation (65) marche / arrêt aux antennes cadres (1, 2, 3) séquentiellement et en alternance de façon à ce que le dispositif (5) d'antennes émette un champ ($\vec{H}$) magnétique alternatif quasiment isotrope.

**2.** Procédé suivant la revendication 1,
   **caractérisé en ce que** l'on effectue sur une antenne cadre placée sur le module (7) de réception une induction pour une réception de l'unité (INF) d'information.

3. Procédé suivant la revendication 1 ou 2,
   **caractérisé en ce que** l'on peut régler sensiblement orthogonalement les uns aux autres, les plans (10, 20, 30) définis par les antennes cadres (1, 2, 3) et / ou disposer les antennes cadres (1, 2, 3) les unes dans les autres.

4. Procédé suivant l'une des revendications 1 à 3,
   **caractérisé en ce que** l'on raccorde plusieurs dispositifs (5, $5_1$, $5_2$, $5_3$) d'antennes à un câble coaxial et on les monte en cascade et on produit un champ ($\vec{H}$) magnétique alternatif quasiment isotrope, soit par un câblage (8) prenant en compte la position mutuelle du dispositif (5) d'antennes, soit par un positionnement géométrique des divers dispositifs (5) d'antennes.

5. Procédé suivant la revendication 4,
   **caractérisé en ce que** les dispositifs (5, $5_1$, $5_2$, $5_3$) d'antennes, montés en cascade sont de construction identique, mais de sorte que deux dispositifs (5, $5_1$, $5_2$, $5_3$..) successifs sont toujours tournés de pi.

6. Procédé suivant la revendication 5,
   **caractérisé en ce que** l'on génère les unités (INF) d'information au moyen d'un oscillateur (61) et d'un modulateur (60, 63) raccordés et on les envoie au câble (72) coaxial.

Fig. 1a

Fig. 1b

Fig. 2

Fig. 7

Fig. 3a

Fig. 3b

Fig. 9

Fig. 4

Fig. 5

EP 1 303 831 B1

EP 1 303 831 B1

Fig. 6

Fig. 8